# EUROPEAN PATENT APPLICATION

(11) **EP 0 554 043 A2**
(43) Date of publication of application: **04.08.1993**
(21) Application number: 93300542.3
(22) Date of filing: 26.01.1993
(51) Int. Cl.: G11B 27/028, G11B 27/34

(54) **Editing system**

(30) Priority: 28.01.1992 JP 35738/92; 28.01.1992 JP 35739/92; 28.01.1992 JP 35740/92
(71) Applicant: SONY CORPORATION, Tokyo (JP)
(72) Inventor: Saito, Yutaka, c/o Sony Corporation, Tokyo 141 (JP)
(74) Representative: Harris, Ian Richard

(57) **Abstract**

An editing system for selectively recording play signals from plural reproducing apparatuses via a switcher. In an editing data setting mode, the source data of the editing data are compared to one another at an arbitrary time juncture of issuance of tracing instructions, the respective editing data are automatically corrected on the basis of the results of comparison so that the number of times of dubbing is minimized, and the operations of the reproducing apparatuses, recording device and the switcher are controlled based on the corrected editing data.

## Description

This invention relates to an editing system.

In conventional video tape editing, for example, so-called electronic editing of video tapes, video and audio signals as required are recorded in succession from an original tape on a tape for recording, that is a master tape.

As an editing system for electronic editing, there exist such a system employing an original VTR and a master VTR (1:1 editing system), and such a system in which plural original VTRs and plural master VTRs are provided and a production switcher or a mixer are controlled for processing recording signals during editing recording on the master tapes to provide for high-grade special image effects or voice mixing. These editing systems are known for example from US Pat. Nos.4,858,027 and 4,528,600.

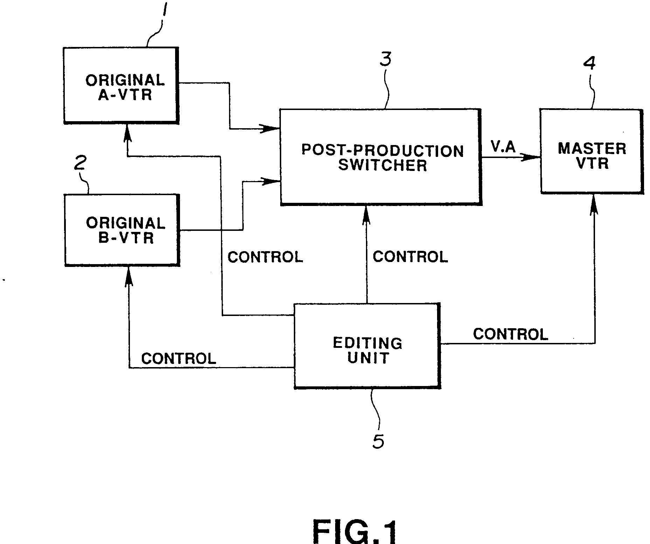

Fig.1 shows, as an example of such editing systems, a so-called A-, and B-roll type editing system.

Referring to Fig.1, playback VTRs 1, 2 (A-roll VTR and a B-roll VTR, respectively) are connected to a post-production switcher 3, so that signals of the VTRs 1 or 2 as selected by switching at the post-production switcher 3 are transmitted to a recording master VTR 4. An editor 5 transmits control signals based on a preset editing list to each of the VTRs 1, 2 and 4 and to the post-production switcher 3. This controls the operation of the VTRs 1, 2 and 4 and the switcher 3 in accordance with the editing list to provide for an automatic editing.

It is noted that the A-, and B roll system employing two playback VTRs shown in Fig.1 features the use of the post-production switcher enabling processing with high degree of completion through exploitation of image processing techniques.

On the other hand, for controlling the above-mentioned electronic editing system (editing control), so-called a LIST management operation based on a program list or an editing list is usually performed.

A tracing function or tracing operation, provided in the LIST management operation, is a function used when preparing an editing tape by dubbing signals from a source tape a plurality of number of times for minimizing deterioration otherwise caused by dubbing. The function consists in searching or tracing a tape of a material as close to the material of the source tape in the preparation of the editing tape.

Meanwhile, when carrying out a tracing operation in the above-described conventional editing systems, preset and prerecorded (or stored) editing data are read out and displayed on e.g. a digital making (DM) screen, an operator checks for and corrects individual data of a one-page editing data displayed on the DM screen and re-records the corrected data, and the tracing operation is performed on the re-recorded data. The result is the extremely complicated tracing operation.

As the electronic editing system, there is also known an editing system employing an original VTR for a C-roll, besides the original VTR for A-roll and the original VTR for B-roll.

The original VTR for C-roll is operated in synchronism with the operation of the master VTR and is used for editing in which signals from the original VTR for the C-roll are inserted in the course of editing of the A, B roll.

Meanwhile, in the conventional editing system, the data structure is such that the LIST operation can hardly be performed on the C-roll. For example, the conventional editing data for the C-roll are simply recorded in a so-called NOTE sentence and, when performing the above-mentioned tracing operation, it is necessary for an operator to check and correct data one by one thus raising considerable difficulties in the tracing operation of the editing data for the C-roll.

Among the LIST management operations is a so-called clean-up operation, which is an operation in which, if, when recording signals from the original VTR for B-roll after signals from the original VTR for A-roll, the in-point of the B-roll is ahead of the out-point of the A-roll, the above-mentioned program is automatically changed to coincide the out-point of the A-roll with the in-point of the B-roll.

However, the conventional editing system is of a data structure which renders it difficult to perform a LIST operation for the C-roll. For example, there is no editing-data in the conventional C-roll other than that written in the so-called NOTE sentence, so that it is necessary for the operator to re-write the data one by one if the editing contents need to be changed. This renders the clean-up operation of the editing data for the C-roll extremely difficult.

In accordance with one aspect of the present invention, there is provided an editing system for selectively recording play signals from plural reproducing apparatuses via a switcher comprising input means for inputting editing data, display means for displaying said editing data, correction means operative in an editing data setting mode for comparing source data of said editing data at an arbitrary time point of issuance of tracing instructions for automatically correcting the respective editing data to minimize the number of times of dubbing based on the results of comparison, storage means for storing said editing data corrected by said correction means, and control means for controlling the operation of said reproducing apparatuses, said recording apparatus and the switcher based on the editing data stored in said storage means.

In accordance with another aspect of the present invention, there is also provided an editing system for selectively recording play signals from first, second and third reproducing apparatuses via a switcher, comprising input means for inputting first, second and third editing data to said first, second an the third reproducing apparatuses, display means for displaying said editing data for said first, second and third editing data, correction means operative in an editing data setting mode for comparing source data of said first, second and third editing data at an arbitrary time point of issuance of tracing instructions for automatically correcting the respective editing data to minimize the number of times of dubbing based on the results of comparison,d) storage means for storing said editing data corrected by said correction means, and control means for controlling the operation of said first, second and third reproducing apparatuses, said recording apparatus and the switcher based on the first, second and the third editing data stored in said storage means.

In accordance with a further aspect of the present invention, there is also provided an editing system for selectively recording play signals from first, second and third reproducing apparatuses via a switcher, comprising input means for inputting first and second editing data including in-point and out-point data of said first, second and third reproducing apparatuses, correction means operative on issuance of cleanup instructions for comparing the first and second edit data for automatically correcting the positions of said in-points and/or out-points of said first, second and the third reproducing apparatuses so that the in-point to out-point intervals of said first and second editing data are not overlapped with each other, storage means for storing said first and second editing data corrected by said correction means, and control means for controlling the operation of said first, second and third reproducing apparatuses, said recording apparatus and the switcher based on the first and second editing data stored in said storage means.

An embodiment of the present invention enables an editing data tracing operation to be performed easily. Also, an embodiment of the present invention can enable the tracing operation of the editing data for the A-, B- and C-rolls to be performed easily. Further, an embodiment of the present invention can enable a clean-up operation of the editing data for the A-, B-and C-rolls to be performed easily.

The invention is described hiereinafter, by way of example only, with reference to the accompanying drawings, in which:

Figure 1 is a block diagram showing a typical conventional editing system.

Figure 2 is a block diagram showing an embodiment of an editing system according to the present invention.

Figures 3 and 4 are flow charts for illustrating the tracing operation by the editing system shown in Figure 2.

Figure 5 is a flow chart for illustrating a clean-up processing operation by the editing system shown in Fig.2.

Fig.6 is a diagrammatic view showing the clean-up processing operation by the editing system shown in Fig.2.

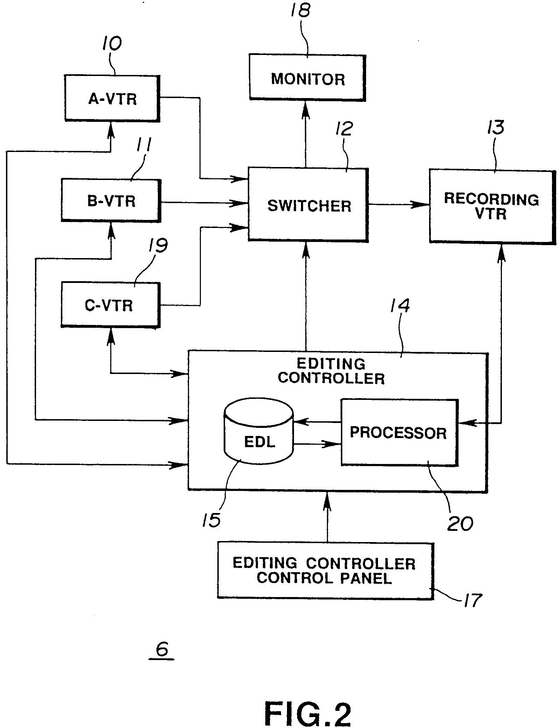

Referring to Fig.2, an editing system 2 embodying the present invention transmits playback signals from plural players, such as an A-roll player 10, a B-roll player 11 etc. via a switcher 12 to a recorder 13 for recording under control by an editing controller 14. The editing data are displayed on a monitor for displaying a DM screen 18. In a setting mode for editing data associated with the plural players, the resource information of the respective editing data, that is, reel numbers, in-points and out-points of the tapes loaded on the players, are compared by an editing controller 14 at an arbitrary time juncture at which a command for performing a tracing operation is issued. Based on the results of comparison, the editing controller 14 corrects the editing data for minimizing the number of times of dubbing operations.

Meanwhile, the editing system 6 of the embodiment illustrated is an editing system employing a C-roll player 19 in addition to the above-mentioned A-roll player 11 and the B-roll player 12. The C-roll player 19 is operated in synchronism with the operation of the master VTR and is used for editing in which signals from the original VTR for the C-roll are inserted in the course of editing of the A, and B roll. Meanwhile, in the conventional editing system, the data structure is such that the LIST operation can hardly be performed on the C-roll. For example, the editing data for the C-roll in the conventional system is hardly more than that recorded in the so-called NOTE sentence so that it has been necessary for the operator to perform an operation of checking and correcting data one by one when performing the above-mentioned tracing operation. This raises considerable difficulties in the C-roll editing data tracing operation.

In the embodiment illustrated, by setting the structure of the C-roll editing data so as to be equal to that of the editing data for the A- and B-rolls, the LIST management operation ,such as tracing operation, may be enabled not only on the A-roll editing data and the B-roll editing data but also on the C-roll editing data in the course of the editing control operation.

The editing system shown in Fig.2 includes the A-roll player (VTR) 10 and the B-roll player (VTR) 11, play data of which are transmitted to or recorded in recorder (VTR) 13 via switcher 12 in accordance with editing data. The editing system also includes the C-roll player (VTR) 19, the operation of which is started in synchronism with the recorder 13, and an editing controller 14 controlling these components. In the editing data setting mode for each of the A-roll player 11, B-roll player 12 and the C-roll player 19, the editing controller 14 compares the source information of the editing data, such as reel numbers, at an arbitrary time juncture at which tracing designation command has been issued via an editing control panel, and automatically corrects the editing data, based on the results of comparison, so as to diminish the number of times of the dubbing operations to a minimum.

In the editing system of Fig.2, play signals from the A-roll player 10, the B-roll player 11 and the C-roll player 19 are connected so as to be supplied to the switcher 12. Responsive to control signals from the editing controller 14 controlling the components based on the editing data, the switcher 12 changes over play signals from the respective sources, that is the A-, B- and C-rolls, to output the signals from the selected source. It is also possible for the switcher 12 to perform a predetermined image converting operation, such as a so-called dissolve processing or wiping, on the video signals transmitted from the players, based on the editing data, to produce special effect images. An output from switcher 12 is supplied to recorder 13.

Besides, the A-roll player 10, B-roll player 12, C-roll player 19 and the recorder 13 are also controlled in their operations, such as play start or recording start, by control signals from editing controller 14 based on the aforementioned editing data. More concretely, the operations of the players and the recorder are controlled on the basis of the time codes for the players and the time code for the recorder which are a part of the editing data. Meanwhile, the frame-by-frame time codes are employed in the present embodiment.

Automatic editing is rendered possible by the operations of the players, recorder and the switcher being controlled in this manner by control signals from the editing controller 14 based on the above-mentioned editing data.

Besides, the monitor 18 is connected to the switcher 12 to permit the operator to view an image being edited by the monitor 18. Besides, the DM screen may also be viewed in the setting mode for the editing data for the A-roll player 11, B-roll player 12 and the C-roll player 19.

In the embodiment illustrated, the source data of the editing data displayed on the monitor 18 in the setting mode for the editing data are compared and the editing data are corrected to minimize the number of times of the dubbing operations based on the results of comparison. That is, the editing system of the embodiment illustrated in the course of editing control operations handles the unrecorded editing data displayed on the DM screen at the time of editing input as if these data were a part of the recorded editing data to render it possible to perform the tracing operation on the unrecorded editing data displayed on the DM screen. In this manner, the tracing operation may be performed before recordal of the editing data.

The operation of the tracing operation in the present embodiment is hereinafter explained.

It is first assumed that the editing data inclusive of the reel number, in-point and the out-point of the reel loaded on each player are already formulated and stored in an editing data storage memory 15 enclosed in an editing controller 14. A dialogue is first had concerning execution of the tracing operation on the DM screen from control panel 17 to cause the tracing operation to be executed in accordance with the present embodiment.

In a processing section 20 responsible for the tracing operation,the input editing data entered from the control panel 17 are analyzed in the setting mode of the respective editing data and necessary data, such as data of the reel number, in-point and the out-point, are taken out from the editing data for the A-roll, B-roll and the C-roll stored in the editing data storage memory 15 to enable execution of the tracing operation. That is, the source data, such as data of the reel number, in-point and the out-point, of the editing data are compared at an arbitrary time juncture when the tracing designation command has been issued, and the editing data is corrected to minimize the number of times of dubbing operations based on the results of comparison, that is, the tracing operation is performed, as indicated by a flow chart as hereinafter described.

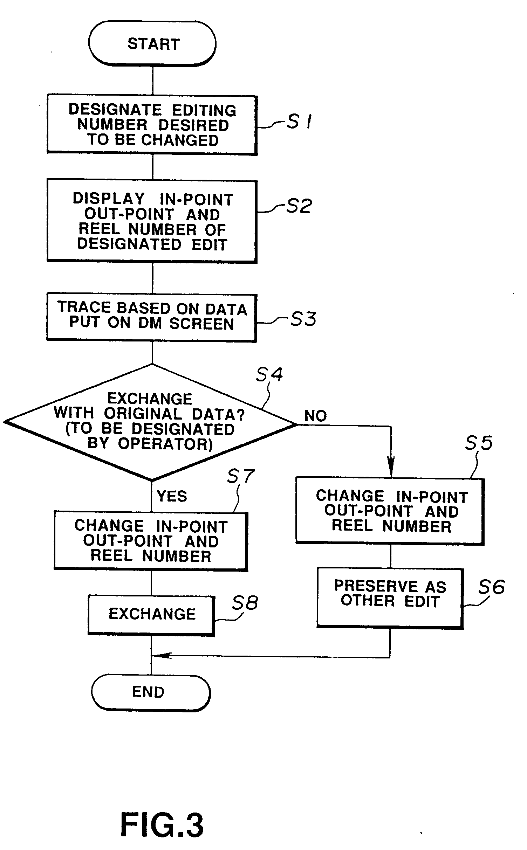

A flow chart for the tracing operation is shown in Fig.3.

Referring to Fig.3, the edit number desired to be changed is designated at step S1. The editing data of the editing number desired to be changed is read out at this time from memory 15 so as to be displayed as the DM screen at step S2.

At step S3, the source data of the respective editing data, such as the reel number, in-point and the out-point, are compared on the basis of the data displayed on the Dm screen, and the editing data are automatically corrected, on the basis of the results of comparison, so as to give the minimum number of times of the dubbing operations, by way of performing the tracing operation.

At step S4, it is checked by the operator if the editing data of the original editing number should be exchanged by the editing data obtained by tracing on the DM screen. The operator then operates the control panel to make an entry as to whether or not such exchange should be made.

If it is decided at step S4 that the original editing data should be exchanged by new editing data, control proceeds to step S7. At this step S7, a new set of editing data of the changed in-point, out-point and reel number is transmitted to memory 15. At step S8, the new set of data is stored in substitution for the original editing data stored in memory 15.

If it is decided at step S4 that the original editing data should not be exchanged by new editing data, control proceeds to step S5. At this step S5, a new set of editing data of the changed in-pint, out-point and reel number is transmitted to memory 15. At step S6, the new set of the editing data is stored in another storage area as another set of editing data.

With the above-described editing system, the editing control renders it possible to perform the tracing operation of unrecorded editing data displayed on the DM screen of the monitor 18 at the time of entry of the editing data, so that the tracing operation may be performed in the course of the formulation of the editing data to render it possible to formulate the editing data efficiently.

Also, with the above-described editing system, since the editing control renders it possible to perform a LIST management processing (tracing operation) not only on the editing data for the A-roll player 10 and the B-roll player 11, but also on the editing data for the C-roll player 19, there is no necessity for the operator to check and correct the editing contents to facilitate the tracing operation significantly.

With the above-described editing system, the source data of the respective editing data is compared at an arbitrary time juncture when the tracing designation command is issued at the time of setting the editing data for automatically correcting the editing data so as to minimize the number of times of the dubbing operations. In this manner, the editing data indicating the editing operation employing the source closest to the original source may be automatically acquired before proceeding to recordal of the editing data. The result is that the operation for the operator to check and correct the editing contents one by one is eliminated to facilitate the tracing operation significantly.

On the other hand, the tracing operation on the A-roll, B-roll and the C-roll is performed in the following manner.

It is first assumed that the editing data inclusive of the reel number of the reel loaded on each player are already formulated and stored in an editing data storage memory 15 enclosed in an editing controller 14. A dialogue is first had concerning execution of the tracing operation from control panel 17 to cause execution of the tracing operation.

In the processing section 20 responsible for the tracing operation, the editing data for the A-roll, B-roll and the C-roll, stored in memory 15 for storage of the editing data, are processed page by page on the basis of the input editing data entered from the control panel 17. That is, the reel numbers, for example, of the editing data for the A-, B- and C-rolls are compared to one another and the editing data are corrected, that is the tracing operation is performed, for minimizing the number of times of dubbing based on the results of comparison. Subsequently, the designated pages of the corrected editing data are processed in their entirety.

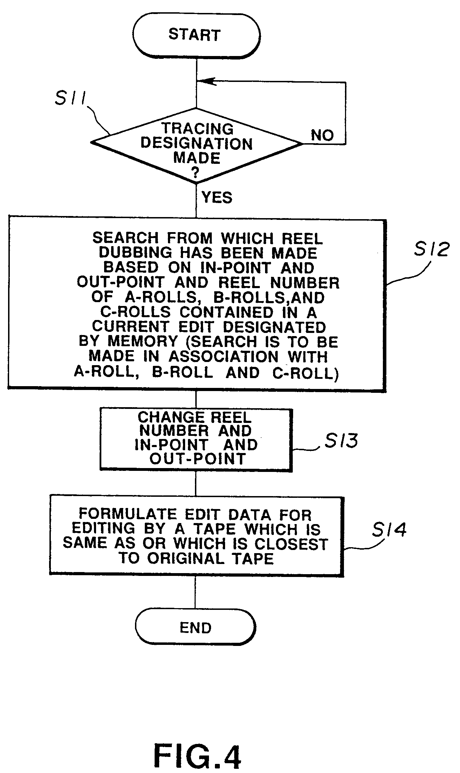

A flow chart for the tracing operation for the A-, B- and C-rolls is shown in Fig.4.

In Fig.4, it is checked at step S11 whether or not designation of the tracing operation has been made from the control panel 17. If it is decided at step S11 that the tracing has not been designated, the operation of step S11 is repeated. If it is decided at step S11 that the tracing has been designated, control proceeds to step S12.

At step S12, an operation of searching from which reel dubbing has been made (tracing operation) is performed from the editing data stored in the memory 15 within the editing controller 14, on the basis of the in-point, out-point and the reel number for each of the A-, B- and C-rolls contained in the current edit designated for the tracing operation. Meanwhile, the tracing operation is performed on each of the A-, B- and C-rolls.

After step S12, control proceeds to step S13, where the previously designated reel number, in-point and the out-point of the editing data are exchanged for the reel number, in-point and the out-point of the traced source.

After step S13, control proceeds to step S14, where editing data are formulated for performing an editing using a tape (source) closest to the original source, as found by the above tracing operation.

With the above-described editing system, a LIST management processing (tracing operation) is performed by editing control not only on the editing data for the A-roll player 10 and the B-roll player 11, but also on the editing data for the C-roll player 19, so that there is no necessity for the operator to check and correct the editing contents one by one and consequently the tracing operation may be facilitated significantly.

The clean-up operation in the embodiment illustrated is hereinafter explained.

It is first assumed that the editing data are already formulated and stored in an editing data storage memory 15 enclosed in an editing controller 14. A dialogue is first had concerning execution of the clean-up operation from control panel 17 to cause the execution of the tracing operation.

In a processing section 16 responsible for the cleanup operation, the editing data for the A-, B- and C-rolls, stored in editing data storage memory 15, are processed page by page on the basis of input editing data entered from control panel 17. That is, as indicated in a flow chart as hereinafter explained, the in-point, out-point and the editing type of the editing data for the A-, B- and C-rolls are compared with one another, and the respective editing data are corrected on the basis of the results of comparison. Subsequently, the designated pages of the corrected editing data are processed in their entirety.

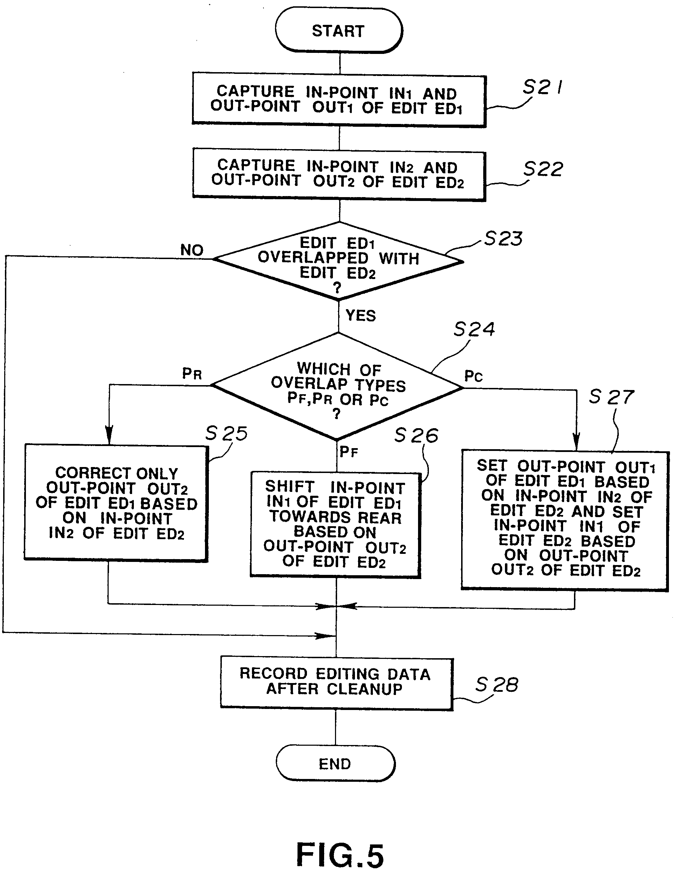

A flow chart for correction in the cleanup operation for the editing data for the A-, B- and C-rolls is shown in Fig.5.

Referring to Fig.5, data (such as time codes) of an in-point IN₁ and an out-point OUT₁ of an edit ED₁, which is an editing data showing an editing list, are captured at step S21, and data (such as time codes) of an in-point IN₂ and an out-point OUT₂ of an edit ED₂, which is a second editing data, are captured at step S22.

Meanwhile, the edits ED₁ and ED₂ comprise data indicating e.g. the in-point and out-point of each of the A-, B- and C-rolls.

At step S23, it is checked from data of the edits ED₁ and ED₂ if there is any overlapping in the editing data. If it is found at step S23 that there is no overlapping, control passes to step S28 where recordal is made of the editing data following the cleanup operation. If it is found at step S23 that there is any overlapping in the editing data, control passes to step S24 to check the state of overlapping (type of overlapping).

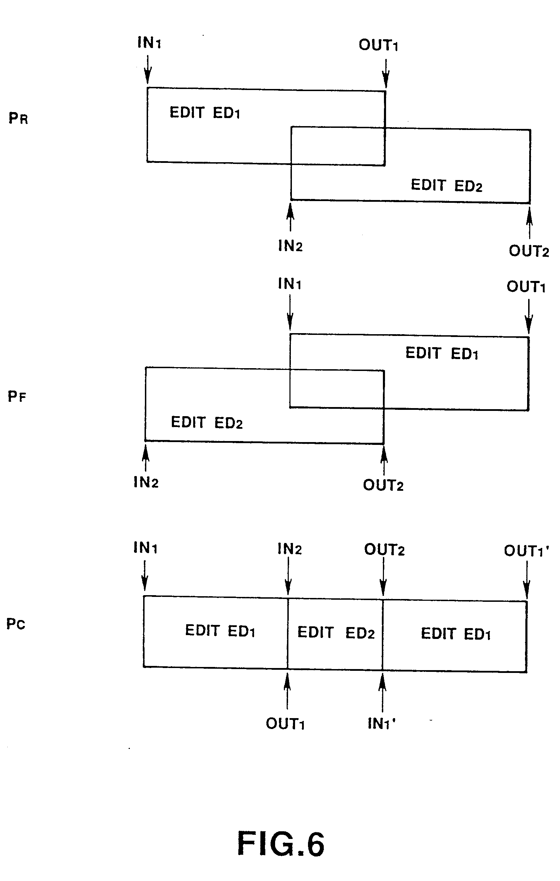

The three types of overlapping as shown in Fig.6 may be contemplated as the simplest examples. These three types consist in a type P_{R} in which the front side of the edit ED₂ is overlapped with a rear part of the edit ED₁, a type P_{F} in which a front side of the edit ED₁ is overlapped with a rear part of the edit ED₂, and a type P_{C} in which the edit ED₂ is overlapped within the interior of the edit ED₁. Although other more complex states of overlapping in which these three are combined in a composite manner, solely the above-described three types are explained for simplicity.

At step S24 of the flow chart, it is checked to which of the three types P_{R}, P_{F} and P_{C} belongs the type of overlapping of the editing data.

If the type of overlapping is found at step S24 to belong to type P_{R}, control passes to step S25. Only the out-point OUT₁ of the edit ED₁ is corrected (that is, the time code is corrected) at step S25 based on the in-point IN₂ of the edit ED₂. That is, the out-points of the A-, B- and C-rolls are automatically corrected so that the out-points of one or more of the A-, B- and C-rolls are ahead of the in-point IN₂ of the edit ED₂.

If the type of overlapping is found at step S24 to belong to type P_{F}, control passes to step S26. At this step S26, the in-point IN₁ is shifted rearward, based on the out-point OUT₂ of the edit ED₂. This proves to be a correction of shifting the in-points of the A-, B- and C-rolls rearward in their entirety on the basis of the out-point OUT₂ of the edit ED₂ (time code correction).

If the type of overlapping is found at step S24 to belong to type P_{C}, the out-point OUT₁ of the edit ED₁ is set on the basis of the in-point IN₂ of the out-point OUT₁ of the edit ED₁, while the n-point IN₁ of the edit ED₁ is set based on the out-point OUT₂ of the edit ED₂ (time code correction). This proves to be an operation of correcting the in- and out-points of the A-, B- and C-rolls so that these in- and out-points will meet the above-mentioned conditions.

Then, at step S28, recordal is made of the post-cleanup editing data.

With the editing system of the illustrated embodiment, as described hereinabove, since the editing control achieves the LIST management processing operation (cleanup operation) not only on the editing data of the A-roll player 10 and the B-roll player 11 but also on the editing data of the C-roll player 19, it is unnecessary for an operator to perform an operation of rewriting data one by one, even in the case of changing the editing contents, so that the cleanup operation is facilitated remarkably.

## Claims

1. An editing system for selectively recording play signals from plural reproducing apparatuses via a switcher comprising
a) input means for inputting editing data,
b) display means for displaying said editing data,
c) correction means operative in an editing data setting mode for comparing source data of said editing data at an arbitrary time point of issuance of tracing instructions for automatically correcting the respective editing data to minimize the number of times of dubbing based on the results of comparison,
d) storage means for storing said editing data corrected by said correction means, and
e) control means for controlling the operation of said reproducing apparatuses, said recording apparatus and the switcher based on the editing data stored in said storage means.

2. A editing system for selectively recording play signals from first, second and third reproducing apparatuses via a switcher, comprising
a) input means for inputting first, second and third editing data to said first, second an the third reproducing apparatuses,
b) display means for displaying said editing data for said first, second and third editing data,
c) correction means operative in an editing data setting mode for comparing source data of said first, second and third editing data at an arbitrary time point of issuance of tracing instructions for automatically correcting the respective editing data to minimize the number of times of dubbing based on the results of comparison,
d) storage means for storing said editing data corrected by said correction means, and
e) control means for controlling the operation of said first, second and third reproducing apparatuses, said recording apparatus and the switcher based on the first, second and the third editing data stored in said storage means.

3. The editing system as defined in claim 2 wherein
said first, second and the third data are data indicating the in-points and out-points for said first, second and third reproducing apparatuses.

4. A editing system for selectively recording play signals from first, second and third reproducing apparatuses via a switcher, comprising
a) input means for inputting first and second editing data including in-point and out-point data of said first, second and third reproducing apparatuses,
b) correction means operative on issuance of cleanup instructions for comparing the first and second edit data for automatically correcting the positions of said in-points and/or out-points of said first, second and the third reproducing apparatuses so that the in-point to out-point intervals of said first and second editing data are not overlapped with each other,
c) storage means for storing said first and second editing data corrected by said correction means, and
d) control means for controlling the operation of said first, second and third reproducing apparatuses, said recording apparatus and the switcher based on the first and second editing data stored in said storage means.

5. The editing system as defined in claim 4 further comprising
display means for displaying said first and second edit data.
